# EUROPEAN PATENT SPECIFICATION

(11) **EP 0 405 636 B1**
(45) Date of publication and mention of the grant of the patent: **08.09.1993**
(21) Application number: 90201534.6
(22) Date of filing: 14.06.1990
(51) Int. Cl.: A47J 42/32, B02C 4/02, B02C 4/06

(54) **A household machine for grinding seeds, grains and the like**
Haushaltsgerät zum Mahlen von Keimen, Getreidekörnern und ähnlichem
Ustensile de ménage pour le moulinage de grains et similaires

(30) Priority: 26.06.1989 IT 4164189
(43) Date of publication of application: 02.01.1991
(73) Proprietor: O.M.C. MARCATO s.r.l., 35011 Campodarsego (IT)
(72) Inventor: Marcato, Piero, I-35011 Campdarsego (IT)
(74) Representative: Robba, Eugenio

(56) References cited:
- DE-A- 3 716 696
- DE-A- 3 726 681
- DE-C- 247 656

## Description

The present invention relates to household machine similar to a roller mill or grinder adapted for grinding seeds, grains and the like.

In the field of foodstuff it is widely spread, particularly for diets, the use of wholemeal foods rich in fibers, such as bran or the like.

To this aim flours of various kinds are on the market at costs more or less high.

To those concerned with a diet or a cure it seems more trustworty to be able to obtain by themselves flours and ground foods starting from the original crops such as seeds, grains, etc.

Flours, ground foods and the like are presentely obtained by means of various kind of house tools (or household appliances with uncertain results and poor efficiency.

On the market there are sold conventional roller mills or grinders with modified surfaces of the rollers or rollers that carries variously distributed knurlings instead of being smooth.

By using an existing adjustment device (based upon the change of the supporting eccentricities of the pivot of one of the rollers the distance or gap between the rollers can be properly set according to the size of the grains to be crushed and to the fineness of the product to be obtained. Since the two contrasting requirements of the grain size to be loaded and the fineness of the ground product almost never can be met simultaneously (i.e. with a single pass, in the existing machines two or more passes are necessary.

In accordance with the requirements, when it is desired to obtain from the seeds (or grains only "flakes" instead of flours, the rollers are adjusted in order to be more or less spaced.

Nevertheless it is not possible to obtain constantly the desired kind of "flake" due to differences of "dryness" of the loaded product, sometimes it is obtained a "crushed" product or something "squashed" one.

DE-A-37 26 681 is an example of the above mentioned prior art which refers to a household milling machine comprising two horizontally adjacent rollers housed within a frame that are rotated at different rim speeds with the gap therebetween being adjustable, and discloses a number of patterns for the rollers' grooves.

The present invention aims to overcome the above illustrated drawbacks and limitations and consists of a household milling machine for grinding seeds, grains and the like, comprising two horizontally adjacent rollers housed within a frame that are rotated at different rim speeds, the gap between said rollers being adjustable, characterized in that It comprises a third roller positioned below and adjacent to the upper rollers, in a central location.

By means of the machine according to the present invention it is possible to obtain real "flakes" or flours with different degrees of fineness.

The machine according to the invention provides for three rollers. Two of them are horizontally adjacent, whereas the third one is positioned below and adjacent to the former ones, in a central location.

The three rollers have a knurled surface for gripping the product to be ground passing among them. The axle base of at least one of the three rollers (usually one of the upper rollers) can be adjusted with respect to the other two, being mounted on eccentric bearings in order to modify the gaps between the rollers.

At least one of the rollers is rotated at a peripheral or rim speed different from that of the others two. This way, further to the pressing action (crunching), also a stretching action (scratching) is achieved. This way real flakes and not crushed products, as well as very fine flours are obtained through a single pass.

Further preferred embodiments of the invention are defined in dependent Claims 2 to 6.

The invention will now be described with reference to non limiting embodiments, together with the attached drawings in which:
Fig. 1 is a front view of the machine according to the invention;
Fig. 2 shows the machine of Fig. 1 without the knob and the crank, the side walls being considered as transparent;
Fig. 3 schematically shows a side view of the machine, and more particularly the left side thereof;
Fig. 4 is another schematic side view of the machine and more precisely it shows the right side thereof;
Fig. 5 shows the left side of the machine; and
Fig. 6 shows the right side of the machine.

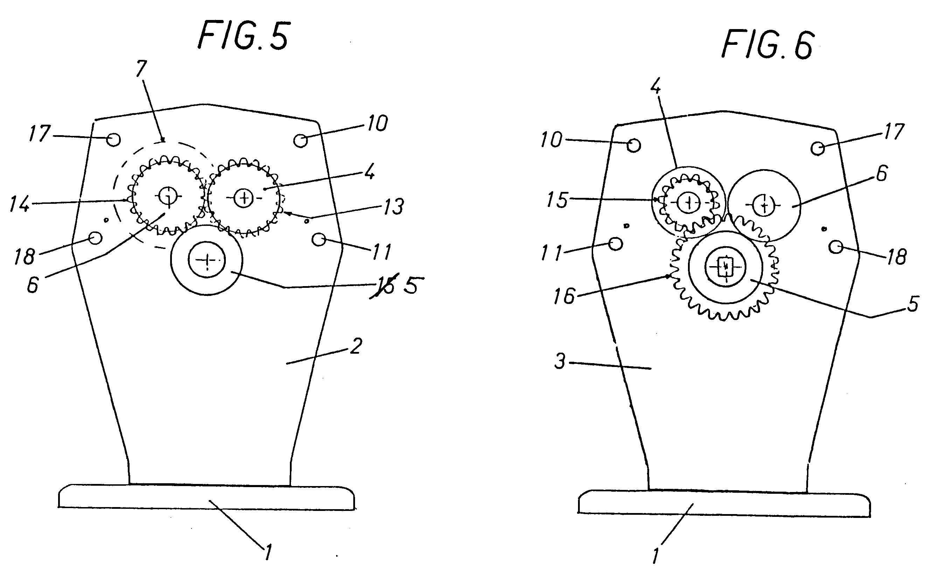

With reference to the Figures, a rest base of the machine has been marked by 1; 2 and 3 are the left and right shoulders, respectively; 4 is one of the upper rollers; 5 is the lower roller; 10 and 11 are two of the four tie rods-spacers (tie rod 11 in the drawing being broken away for a better overall clearness); 7 is the knob for adjusting the rollers' gaps; 8 is the hand crank to rotate the rollers. A gear 13 meshes with a gear 14 (Fig. 5) and gears 15 and 16.

Through the crank 20 engaging the end of 8 in the seat 9, motion is directely imparted to the roller 5 and through the gear pair 16 - 15 to roller 4. The gear ratio is such as the roller 4 rotates quicker than roller 5.

19 indicates a hole in the shoulder 3 for introducing a clamp (not shown) to fasten the base 1 to a rest table.

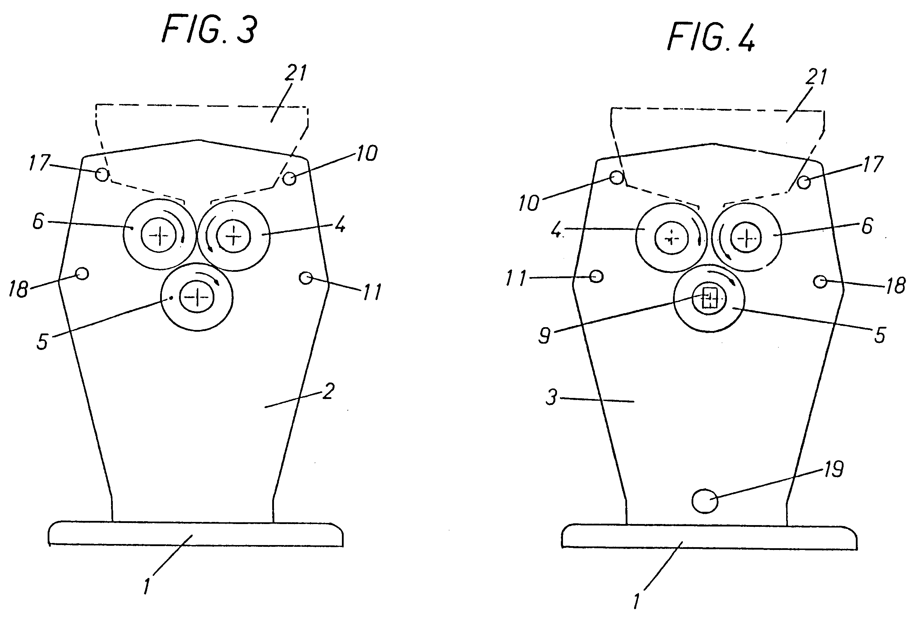

Fig. 3 is more particularly intended to point out the mutual positions of the three operating rollers 4, 5, 6.

It can be noted that the three rollers are adjacent, and more precisely: roller 4 is adjacent to roller 6 thus forming an inlet gap between them; and roller 4 is adjacent to roller 5 thus defining the fineness degree of the product passing inbetween.

The peripheral or rim speed of roller 4 (receiving the motion from roller 6) is greater than the peripheral or rim speed of roller 5 so that the product passing between them is not only "squashed" but also "crushed".

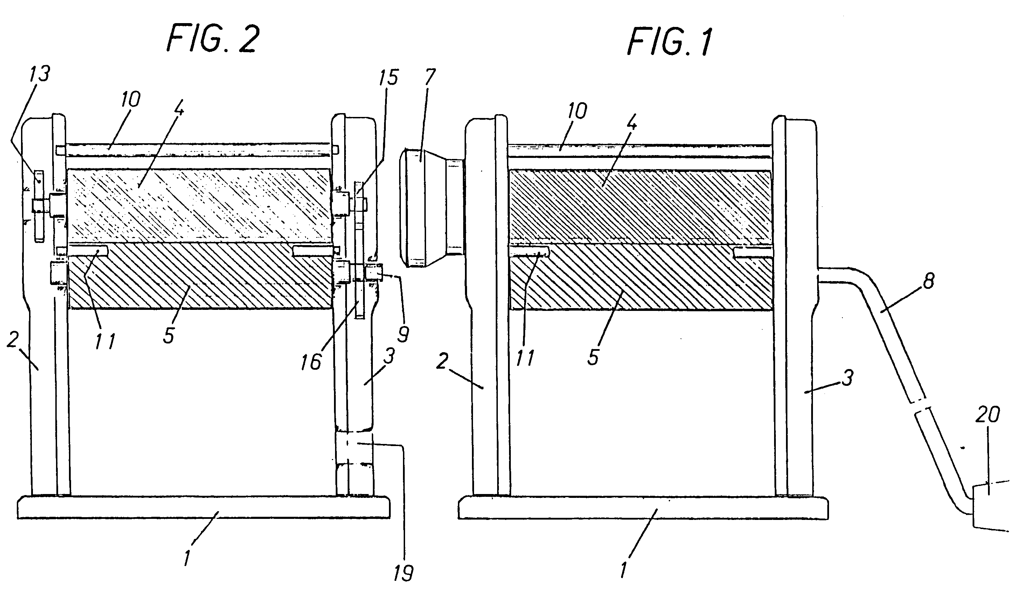

17 and 18 are the other two tie rods-spacers not visible in Fig. 2, whereas 21 indicates a hopper for loading the product to be ground that feeds the product over the gap between rollers 6 and 4 through a lower slit.

With reference to Fig. 4, it is to be noted that roller 6 is slightly spaced from both roller 4 and roller 5.

It is evident that the loaded product (seeds, grains, etc.) is subjected to a partial pressure and a stretching (scratching) between rollers 6 and 5 since the surface of roller 6 moves more quickly than that of roller 4.

Thanks to this device, real flakes can be obtained that are more or less open or widened.

The intermediate positions of the rollers, as shown in Fig. 3 and Fig. 4, allow for obtaining ground products that are intermediate between the "fine" flours and the flakes (or the granulated). The seat for introducing the stem 8 of the crank 20 has been shown at 9, whereas 19 indicates the hole for introducing the fastening clamp.

Fig. 5 shows the left side of the machine wherein the numeral references are the same of the preceding Figures, and illustrates gears 13 and 14 keyed on rollers 6 and 4 respectively.

By dashed lines it is indicated the positioning of the knob 7 for the arrangement to adjust the eccentricity (not shown) which allows for moving roller 6 with respect to the other two.

Gears 16 and 15 shown in Fig. 6 are such that the ratio of the number of revolutions of roller 5 to that of roller 4 is increased. According to the invention a motor can be provided for driving the rollers instead of a hand crank.

It is evident that the different rim speeds of the rollers surfaces can be achieved not only by gears, but also by means of rollers having suitable different diameters.

As it is clear from the above, the machine of the invention is simple to be used and to be made. It affords a considerable production effectiveness (from flakes to flours) by means of a single pass and at the same time allowing for an appreciable reduction of the user's labors.

The sizes, materials, shapes and arrangements of the parts are not limiting, those illustrated being only preferred embodiments with illustrative purposes.

The apparatuses for loading the product to be ground or to collect the ground product (such as hoppers or compartments, etc.) are not part of the present invention.

## Claims

1. A household milling machine (1) for grinding seeds, grains and the like, comprising two horizontally adjacent rollers (4, 6) housed within a frame (2, 3) that are rotated at different rim speeds, the gap between said rollers being adjustable, characterized in that it comprises a third roller (5) positioned below and adjacent to the upper rollers, in a central location.

2. A milling machine as claimed in claim 1, characterized in that said lower third roller (5) carries a first gear (16) engaging a second gear (15) of one (4) of the horizontally adjacent rollers (4, 6) for imparting a rotating motion thereto, the gear ratio being such as the driven roller (4) rotates faster than said third lower roller (5).

3. A milling machine as claimed in claim 1 or 2, characterized in that said one (4) of the horizontally adjacent upper rollers (4, 6) further carries a third gear (14) engaging a fourth gear (13) on the other upper roller (6).

4. A milling machine as claimed in claims 1 to 3, characterized in that at least the gap between a pair of said three rollers is adjustable.

5. A milling machine as claimed in claim 1 or 2, characterized in that it provides for a knob 7 which allows for axially displacing one (6) roller with respect to the other two (4, 5).

6. A milling machine as claimed in claim 1, characterized in that the surfaces of said rollers are knurled or otherwhise rough for ensuring the gripping of the product that is loaded into the machine to be ground or squashed.

## Patentansprüche

1. Haushalts-Mühle (1) zum Mahlen von Samen, Körnern und dergleichen mit zwei horizontal aneinander angrenzenden, in einem Rahmen (2, 3) angeordneten Walzen (4, 6), die mit unterschiedlichen Umlaufgeschwindigkeiten in Drehung versetzbar sind, wobei der Spalt zwischen den genannten Walzen einstellbar ist, dadurch gekennzeichnet, daß sie eine dritte Walze (5) aufweist, die unterhalb der oberen Walzen und an diese angrenzend in zentraler Lage angeordnet ist.

2. Haushalts-Mühle nach Anspruch 1, dadurch gekennzeichnet, daß die genannte untere dritte Walze (5) mit einem ersten Zahnrad (16) verbunden ist, welches mit einem zweiten Zahnrad (15) an einer Walze (4) der horizontal aneinander angrenzenden Walzen (4, 6) kämmt, um eine Drehbewegung zu gewährleisten, und ferner das Übersetzungsverhältnis so gewählt ist, daß die angetriebene Walze (4) sich schneller dreht als die dritte untere Walze (5).

3. Haushalts-Mühle nach den Ansprüchen 1 oder 2, dadurch gekennzeichnet, daß die eine Walze (4) der oberen horizontal aneinander angrenzenden Walzen (4, 6) ein weiteres drittes Zahnrad (14) trägt, das mit einem vierten Zahnrad (13) an der oberen Walze (6) kämmt.

4. Haushalts-Mühle nach den Ansprüchen 1 bis 3, dadurch gekennzeichnet, daß zumindest der Spalt zwischen einem Paar der genannten drei Walzen einstellbar ist.

5. Haushalts-Mühle nach Anspruch 1 oder 2, dadurch gekennzeichnet, daß sie zur Anordnung eines Drehknopfes (7) ausgestattet ist, der eine Axialverschiebung einer der Walzen (6) gegenüber den anderen zwei Walzen (4, 5) ermöglicht.

6. Haushalts-Mühle nach Anspruch 1, dadurch gekennzeichnet, daß die Oberflächen der Walzen Rauhigkeiten oder Riffelungen aufweisen, um das Ergreifen des zu mahlenden oder zu quetschenden Gutes sicherzustellen, das in die Mühle eingegeben wird.

## Revendications

1. Machine de broyage à usage domestique (1) pour broyer des semences, des graines et analogues, comprenant deux rouleaux horizontalement adjacents (4, 6) logés dans un bâti (2, 3) et qui sont mis en rotation à des vitesses périphériques différentes, l'espace entre lesdits rouleaux étant ajustable, caractérisée par le fait qu'il comprend un troisième rouleau (5) disposé en-dessous et en position adjacente aux rouleaux supérieurs dans une position centrale.

2. Machine de broyage selon la revendication 1, caractérisée par le fait que ledit troisième rouleau, inférieur, (5) supporte un premier pignon (16) en prise avec un second pignon (15) de l'un (4) des rouleaux horizontalement adjacents (4, 6) pour lui communiquer un mouvement de rotation, le rapport d'engrenage étant tel que le rouleau entraîné (4) tourne plus vite que ledit troisième rouleau, inférieur, (5).

3. Machine de broyage selon la revendication 1 ou 2, caractérisée par le fait que l'un (4) des rouleaux supérieurs, horizontalement adjacents, (4, 6) porte en outre un troisième pignon (14) en prise avec un quatrième pignon (13) sur l'autre rouleau supérieur (6).

4. Machine de broyage selon les revendications 1 à 3, caractérisée par le fait qu'au moins l'espace entre une paire desdits trois rouleaux est ajustable.

5. Machine de broyage selon la revendication 1 ou 2, caractérisée par le fait qu'elle comprend un bouton (7) qui permet de déplacer axialement un rouleau (6) par rapport aux deux autres (4, 5).

6. Machine de broyage selon la revendication 1, caractérisée par le fait que les surfaces desdits rouleaux présentent des aspérités ou autres rugosités pour permettre d'accrocher le produit qui est chargé dans le machine pour être broyé ou écrasé.
